# EUROPEAN PATENT SPECIFICATION

(11) **EP 2 552 188 B1**
(45) Date of publication and mention of the grant of the patent: **01.01.2014**
(21) Application number: 10714177.2
(22) Date of filing: 30.03.2010
(51) Int. Cl.: A01G 3/053

(54) **HEDGE TRIMMER**
HECKENSCHERE
TAILLE-HAIE

(43) Date of publication of application: 06.02.2013
(73) Proprietor: Husqvarna AB, 561 82 Huskvarna (SE)
(72) Inventor: GEJERVALL, Ulrik, S-571 78 Forserum (SE); VALFRIDSSON, Stefan, S-554 66 Jonkopin (SE)
(86) International application number: PCT/EP2010/001997
(87) International publication number: WO 2011/120534

(56) References cited:
- EP-A1- 0 696 419
- EP-A2- 0 422 773
- US-A- 3 217 408

## Description

The present invention relates to a hedge trimmer, and to a hedge trimmer with an improved operation.

Both manual and motorised hedge trimmers are known. Whilst many gardeners still use the manual type of trimmer the motorised trimmers can trim faster and with much less effort for any give hedge trimming job. Hedge trimmers are ideal for cutting large areas of thin branches and stems to provide a neat finish to a hedge. They are not well suited to cutting of larger branches, and any attempt to do so will typically cause the trimmer to "bounce off' from the branch. If a large branch can be brought into the region between the cutting blades of a hedge trimmer when it is in use more often than not it may cause the trimmer to jam. For this reason trimmers are often provided with blades which are shaped specifically to prevent attempted cutting of large branches. An exemple of such hedge trimmers is known from document EP-A-0696419.

Where it is required to cut larger branches, hedge trimmers are generally not well suited. A classically trained gardener would tackle such a job using a pair of Pruning shears, also called hand pruners, or secateurs. A pair of secateurs can provide a slow, controlled, cut of a branch up to around 2 or 3 cm in thickness. This achieves a good clean cut which is ideal for minimising the risk of infection in the cut and allows the control needed to give a tidy appearance.

According to a first aspect the invention provides a hedge trimmer comprising an electric motor and at least two cutting blades, each blade comprising at least one row of teeth with the motor being connected to at least one of the blades so that rotation of the motor produces a movement of at least one of the blades relative to the other, a first user operable switch for operation of the hedge trimmer blades and a second user operable switch which enables a user to select between at least two operating modes of the hedge trimmer, the two modes comprising a hedge trimming mode in which operation of the first user operable switch causes a reciprocal motion of the at least one blade, and a secateur mode in which operation of the switch causes a single cutting cycle to be performed.

The trimmer may be arranged so that in the hedge trimming mode the first user operable switch is operable to cause at least one of the blades of the hedge trimmer to reciprocate at a relatively high speed and relatively low torque relative to the other blade to cause gaps to repeatedly open and close between the teeth on one blade and teeth on the other in which relatively thin branches can be entrapped and cut, and further such that when in the secateur mode initially the blades are held in a stationary position so that a gap is present between the teeth on one blade and the teeth on other blade, and the user operable switch is operable to cause at least one blade to move at a relatively lower speed and relatively higher torque relative to the other blade to perform a single cutting stroke by moving the other blade to close the gap before moving back to the original stationary position.

The invention therefore provides a hedge trimmer with an additional secateur like cutting functionality. Typically, secateurs are recommended for proper cutting of thick vegetation encountered during hedge trimming since sawing or tearing off the thick vegetation can damage the plant. The hedge trimmer disclosed in the invention includes a mode which allows it to function as a secateur in which a single low speed high torque cutting motion is provided. Only a single stroke may be performed in the secateur mode for each activation of the user operable switch.

The hedge trimmer may be arranged such that on entering the secateur mode the blades are automatically moved to the original stationary position in which they are held. This position may be a position in which the largest possible gap is provided between the teeth of one blade and the corresponding teeth of the other blade. Once in this position they may be held until the user activates the user operable switch to perform the single cut. At the end of this cut the blades may remain held in the original position until the switch is activated again.

Most preferably the teeth on the one blade have the same pitch as the teeth on the other blade so that when the secateur mode is activated the blades are initially held in a start position where the teeth are in line with each other on both blades and the openings are at their widest

The user operable switch may comprise a trigger or other pull or push to operate switch.

Each operation of the first user operable switch may cause the trimmer to perform only a single cutting stroke of one close and reopen movement.

For instance when the switch is a trigger the action of a user depressing the trigger and holding it depressed in the hedge trimmer mode may cause the blade to reciprocate until is released. In the secateur mode holding the trigger depressed will cause one single cut to be performed, the trigger having to be released and depressed again for another single cut to be performed.

Operating the user operable switch in the secateur mode may cause the blades to move in one of a plurality of different ways depending on how long the switch is operated for. For example, if the switch is a trigger a short pressing on the trigger may result in a complete cutting cycle.

On the other hand, the hedge trimmer may be arranged so that when in the secateur mode the trigger is released during before the completion of a cutting cycle, the blades immediately return through the shortest way to the original held starting position.

In an alternative, if the trigger is released during the cutting cycle the blade may be caused to stop, and the cycle may only continue when the trigger is pressed again.

In another arrangement, if the trigger is released during the cutting cycle the blade (or blades) may stop and they may return the shortest way to starting position when the trigger is pressed again.

In a preferred arrangement, regardless of the operation a new cutting cycle (close then open) will only be performed when the trigger has been released and pressed again.

The hedge trimmer may include a gear box having an input connected to the motor and an output connected to at least one of the blades, either directly or through a linkage. The gearbox may have at least two different gear ratios and the gear ratio which is selected at any time may be dependent on the mode of operation which is selected, a first of the gear ratios being engaged when in the hedge trimmer mode and a second when in the secateur mode, the first gear ratio being higher than the second gear ratio.

The gearbox may comprise a 2-shift planetary gear. Changing the gear alters the speed of the blades and the torque.

A gear changing mechanism may be provided which causes the gearbox to switch gears. This mechanism may be operated in response to operation of the second user operable switch.

The first gear ratio may be at least 20, or perhaps 30 or more, times higher than the second so that in the hedge trimmer mode the blades move at least 20 times as fast as in the secateur mode when the second gear ratio is used.

The motor may operate at the same speed in both modes. In the secateur mode a single cutting cycle (close and then re-open) may take at least 0.5 seconds, and most preferably at least one second.

In an alternative the speed and torque of the motor may be directly varied by altering the electronic drive strategy of the motor. This would also enable torque to be varied.

The blades may be arranged so that in the hedge trimmer mode they are never fully aligned so that the gap between teeth is always smaller than the gap achieved when the blades are in the initial held position in the secateur mode. This limits the size of stem or branch that can fit between the teeth in the hedge trimmer mode, where the reduced torque will limit the size of branch that can be cut compared with the higher torque secateur mode.

With this invention a single cutting cycle can be understood as one oscillatory forth and back movement of the teeth on the cutting blade. In an alternative embodiment the cutting cycle could well be understood as being one single complete forward or complete backward movement of the cutting teeth. In this sense a complete movement would consist of movement between one of the two possible positions during the oscillatory movement of the cutting blades at which the largest possible gap is provided between the teeth of one blade and the corresponding teeth of the other blade. That is during one cutting cycle one of the cutting blades is moving in forward direction until the largest possible gap between the corresponding cutting teeth is provided, and with the next cutting cycle the cutting blade is moving backwards to until the largest possible gap is provided again. This alternative embodiment does allow for much faster cutting operation, in particular in cases where the moving speed in the secateur mode is significantly lower than in the trimming mode.

There will now be described, by way of example only, one embodiment of the present invention with reference to the accompanying drawings of which:

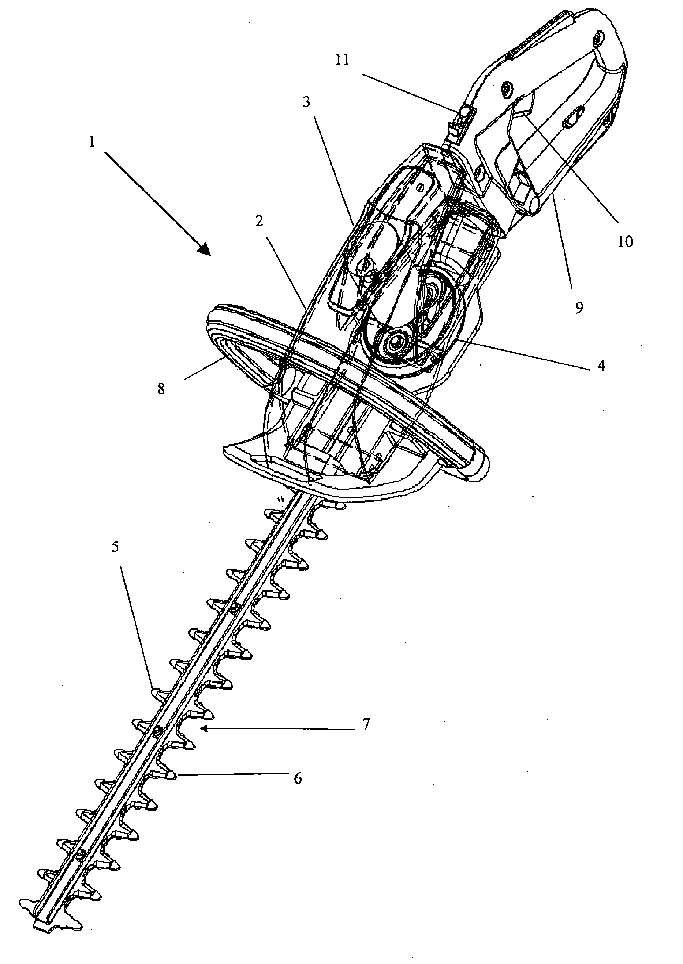

**Figure 1** is a view of an embodiment of a hedge trimmer according to the present invention.

The hedge trimmer 1 comprises a main body housing 2 which houses an electric motor 3 and a gearbox 4. The gearbox 4 comprises an input shaft fixed to an output shaft of the motor which in turn is fixed to or forms part of the motor rotor. The output of the gearbox is connected to a linkage. The arrangement is such that as the motor rotates the linkage moves forward towards one end of the housing and the moves back to its start position. This continues as the motor continues to rotate so that the linkage undergoes a reciprocal motion.

The gearbox comprises a two shift planetary gear allowing two different gear ratios between the input and output shafts of the gearbox to be selected. One gear ratio is approximately 30 times higher than the other.

Two cutting blades are provided, 5,6 one above the other. Each edge of each blade carries a row of cutting teeth, and the teeth of the two blades are spaced such that the teeth on the uppermost blade can be aligned so they overlap the teeth on the lowermost blade. In this position, as shown in Figure 1, gaps 7 between the upper teeth and lower teeth are present which are at a maximum width (only one gap is labelled in the figure but in the example there are 14 along each side of the blades.

One end of each blade 5,6 is located within the housing 2 with the rest of the blades protruding outwards from the housing. The upper blade 5 is connected at its end inside the housing to the linkage so that as the linkage reciprocates the upper blade 5 also reciprocates relative to the lower blade.

This motion causes the gaps 7 between the upper and lower teeth to open and close. Any twigs or branches or other vegetative matter trapped in the gap when it is open will thereby be cut as the gaps close.

A forward handle 8 is provided by which a user can support the weight of the trimmer and a rearward handle 9 is also provided. The forward handle 8 is at the end of the housing nearest the blades 5,6 and the rearward handle is at the end farthest from the blades. A first user operable switch 10, in the form of a trigger, is provided on the rearward handle 9. A second user operable switch 11 is provided on the housing.

The first and second switches 10, 11 are electrically connected to a control circuit (not shown) which provides control signals for a motor drive circuit (also not shown) for the motor. The first user operable switch when pulled will cause the motor to operate in a defined manner according to the mode of the trimmer, causing the upper blade to move as required. The second switch enables a user to select the mode of operation and this example can be set in one of two positions to allow two modes to be selected. The control unit provides a signal indicative of the mode selected and the position of the trigger. It is to be noted that in this example the motor always rotates at the same speed when it is in operation.

The gearbox 4 includes a gear selector comprising an electro-mechanical actuator which moves the gearbox between the first gear ratio and the second gear ratio. This actuator may be operated between in response to operation of the mode setting switch. In the hedge trimmer mode the higher gear is selected and in the secateur mode the lower gear is selected.

The operation in the hedge trimmer mode is as follows. With the trigger 10 is released the motor is stationary and the blades are held stationary. When the user depresses the trigger 10 the motor control circuit causes the motor drive stage to apply current to the motor causing it to turn at a constant angular velocity. This causes the motor to turn the gears of the gearbox 4 which causes the upper blade 5 to reciprocate. As the first gear is engaged which is relatively a high gear the blade will move at high speed and with relatively low torque. On release of the trigger 19 the motor 4 stops and the blade 5 stops moving.

When in the secateur mode the following operation is performed. Initially, with the trigger 10 released, the control circuit causes the motor to rotate to a predefined angular position at which it is known that the teeth of the upper blade are fully aligned with the teeth of the lower blade. This position is shown in Figure 1. The blades are then held in this position, which corresponds to the largest possible gap between adjacent teeth of the upper and lower blades. When the user presses the trigger 10 the control circuit causes the motor drive stage to apply current to the motor which causes it to rotate through a predefined number of revolutions (or part of a revolution or for a predefined time) which is known to correspond to the blades moving to a position in which the gap 7 between teeth is fully closed. Once at that position, the control circuit stops the motor 4 and the motor is then driven in the reverse direction through the same distance (or for the same time) so that the blades move back to the original position making the gap 7 was wide as possible again. Once in that position the blade 5 stops and the motor will not be permitted to turn even though the trigger 10 may remain depressed.

The control unit will initiate a second single cutting action only if the trigger is released and then pressed again, so each press causes one complete cutting cycle. This allows the hedge trimmer to be used as a secateur to give a high degree of control for cutting thicker branches.

Because the second gear is engaged in the secateur mode which is lower than the first gear a much slower cutting action at higher torque is provided. This is well suited to providing a clean cut on relatively thick branches. In this example a single cut cycle takes 1 second.

In the event that the user releases the trigger before the single cutting cycle (gap closed then opened) has been completed the trimmer may function in one of several ways.

In one way, the release of the trigger may simply stop the motor. In that case a second press of the trigger may continue the cutting cycle, or may cause the blades to be moved back by the shortest distance possible to the original held position in which the teeth of the blades fully overlap.

In another the motor may cause the blades to automatically move from where they are positioned when the trigger is released through the shortest distanced to the original held position where the gap is largest.

## Claims

1. A hedge trimmer (1) comprising an electric motor (3) and at least two cutting blades (5,6), each blade comprising at least one row of teeth with the motor (3) being connected to at least one of the blades so that rotation of the motor produces a movement of at least one of the blades relative to the other, a first user operable switch (10) for operation of the hedge trimmer blades and a second user operable switch (11) which enables a user to select between at least two operating modes of the hedge trimmer, the two modes comprising a hedge trimming mode in which operation of the first user operable switch (10) causes a reciprocal motion of the at least one blade, and a secateur mode in which operation of the first user operable switch (10) causes a single cutting cycle to be performed.

2. A hedge trimmer according to claim 1 which is arranged so that in the hedge trimming mode the first user operable switch (10) is operable to cause at least one of the blades of the hedge trimmer (1) to reciprocate at a relatively high speed and relatively low torque relative to the other blade to cause gaps to repeatedly open and close between the teeth on one blade and teeth on the other in which relatively thin branches can be entrapped and cut, and further such that when in the secateur mode initially the blades are held in a stationary position so that a gap is present between the teeth on one blade and the teeth on other blade, and the user operable switch is operable to cause at least one blade to move at a relatively lower speed and relatively higher torque relative to perform a single cutting stroke by moving the other blade to close the gap before moving back to the original stationary position.

3. A hedge trimmer according to claim 1 or claim 2 which is adapted so that on entering the secateur mode the blades are automatically moved to a position in which the largest possible gap is provided between the teeth of one blade and the corresponding teeth of the other blade and once in this position are held until the user activates the user operable switch to perform the single cut.

4. A hedge trimmer according to any preceding claim in which the first user operable switch (10) comprises a trigger or other pull or push to operate switch.

5. A hedge trimmer according to any preceding claim arranged so that each operation of the first user operable switch in the secateur mode causes the trimmer to perform only a single cutting stroke of one close and reopen movement.

6. A hedge trimmer according to any preceding claim which is arranged so that when in the secateur mode the user operable switch (10) is released before the completion of a cutting cycle, the trimmer causes the blades immediately to return through the shortest way to the original held starting position.

7. A hedge trimmer according to any one of claims 1 to 5 which is adapted so that in the event the first user operable switch (10) is released during the cutting cycle the movement of the blade is stopped, and the cycle thereafter continues if the user operable switch is operated again.

8. A hedge trimmer according to any one of claims 1 to 5 which is configured so that when in the secateur mode the trigger (10) is released during the cutting cycle the movement of the blade (or blades) stops and the blades are moved to return the shortest way to starting position when the first user operable switch is operated again.

9. A hedge trimmer according to any preceding claim which includes a gear box (4) having an input connected to the motor and an output connected to at least one of the blades, either directly or through a linkage, the gearbox (4) having at least two different gear ratios and the gear ratio which is selected at any time being dependent on the mode of operation which is selected, a first of the gear ratios being engaged when in the hedge trimmer mode and a second when in the secateur mode, the first gear ratio being higher than the second gear ratio.

10. A hedge trimmer according to claim 9 in which the gearbox (4) comprise a 2-shift planetary gear.

11. A hedge trimmer according to any preceding claim which includes means for varying the speed and torque of the motor (3) according to the mode selected.

12. A hedge trimmer according to any preceding claim which is arranged so that in the hedge trimmer mode the teeth of the two blades are never fully aligned and in which the teeth are aligned when in the secateur mode.

## Patentansprüche

1. Heckenschere (1), umfassend einen Elektromotor (3) und mindestens zwei Schneidmesser (5, 6), wobei jedes Messer wenigstens eine Reihe von Zähnen umfasst, wobei der Motor (3) mit mindestens einem der Messer so gekoppelt ist, dass die Drehung des Motors eine Bewegung zumindest eines der Messer relativ zu dem anderen erzeugt, einen ersten durch den Benutzer betätigbaren Schalter (10) zum Betrieb der Heckenscherenmesser und einen zweiten durch den Benutzer betätigbaren Schalter (11), der es einem Benutzer ermöglicht, zwischen wenigstens zwei Betriebsarten der Heckenschere auszuwählen, wobei die zwei Betriebsarten eine Heckenscheren-Betriebsart, in der die Bedienung des ersten vom Benutzer betätigbaren Schalters (10) eine Hin- und Herbewegung des mindestens einen Messers bewirkt, und eine Gartenscheren-Betriebsart, in der die Bedienung des ersten vom Benutzer betätigbaren Schalters (10) einen einzigen Schneidvorgang bewirkt, umfassen.

2. Heckenschere nach Anspruch 1, so eingerichtet, dass in der Heckenschnitt-Betriebsart der erste vom Benutzer betätigbare Schalter (10) betätigt werden kann, um zu bewirken, dass sich mindestens eines der Messer der Heckenschere (1) bei einer relativ hohen Geschwindigkeit und relativ niedrigem Drehmoment relativ zu dem anderen Messer hin- und herbewegt, um Lücken zwischen den Zähnen auf einem Messer und Zähnen auf dem anderen wiederholt öffnen und schließen, in denen relativ dünnen Zweigen eingeschlossen und geschnitten werden können, und ferner derart, dass bei anfänglicher Gartenscheren-Betriebsart die Messer in einer stationären Position gehalten werden, sodass eine Lücke zwischen den Zähnen auf einem Messer und den Zähnen auf dem anderen Messer vorhanden ist, und der vom Benutzer betätigbare Schalter betätigt werden kann, um zu bewirken, dass sich mindestens ein Messer mit einer relativ niedrigeren Geschwindigkeit und relativ höherem Drehmoment relativ bewegt, um eine einzige Schnittbewegung durch Bewegen des anderen Messers zum Schließen der Lücke auszuführen, bevor es sich wieder in die ursprüngliche Ruheposition zurückbewegt.

3. Heckenschere nach Anspruch 1 oder Anspruch 2, die so angepasst ist, dass bei Aktivierung der Gartenscheren-Betriebsart die Messer automatisch in eine Position bewegt werden, in der sich die größtmögliche Lücke zwischen den Zähnen eines Messers und den entsprechenden Zähnen des anderen Messers bildet, und, wenn in dieser Position, dort gehalten werden, bis der Benutzer den vom Benutzer betätigbaren Schalter aktiviert, um den einzelnen Schnitt auszuführen.

4. Heckenschere nach einem der vorangehenden Ansprüche, bei der der erste vom Benutzer betätigbare Schalter (10) einen Auslöser oder anderen Zug- oder Druckmechanismus umfasst, um den Schalter zu betätigen.

5. Heckenschere nach einem der vorangehenden Ansprüche, so eingerichtet, dass jede Bedienung des ersten vom Benutzer betätigbaren Schalters in der Gartenscheren-Betriebsart bewirkt, dass die Schere nur eine einzige Schnittbewegung durch eine Bewegung des Schließens und Wiederöffnens ausführt.

6. Heckenschere nach einem der vorangehenden Ansprüche, so eingerichtet, dass, wenn der vom Benutzer betätigbare Schalter (10) in der Gartenscheren-Betriebsart vor dem Ende eines Schnitt-Zyklus losgelassen wird, die Schere bewirkt, dass die Messer sofort auf dem kürzesten Weg in die ursprüngliche Ausgangsposition zurückkehren.

7. Heckenschere nach einem der Ansprüche 1 bis 5, so angepasst, dass im Falle des Loslassens des ersten vom Benutzer betätigbaren Schalters (10) während des Schnitt-Zyklus die Bewegung des Messers gestoppt wird und der Zyklus danach fortgesetzt wird, wenn der vom Benutzer betätigbare Schalter erneut betätigt wird.

8. Heckenschere nach einem der Ansprüche 1 bis 5, so konfiguriert, dass, wenn der Auslöser (10) in der Gartenscheren-Betriebsart während des Schnitt-Zyklus losgelassen wird, die Bewegung des Messers (oder der Messer) stoppt, und die Messer auf dem kürzesten Weg in die Ausgangsposition bewegt werden, wenn der erste vom Benutzer betätigbare Schalter erneut betätigt wird.

9. Heckenschere nach einem der vorangehenden Ansprüche, deren Getriebe (4) einen mit dem Motor gekoppelten Eingang hat, und einen Ausgang einschließt, der mit mindestens einem der Messer gekoppelt ist, entweder direkt oder über ein Gestänge, wobei das Getriebe (4) mindestens zwei unterschiedliche Übersetzungsverhältnisse aufweist, und das Übersetzungsverhältnis, das ausgewählt wird, zu jeder Zeit abhängig von der ausgewählten Betriebsart ist, ein erstes Übersetzungsverhältnis, das in der Heckenscheren-Betriebsart eingelegt ist und ein zweites, das in der Gartenscheren-Betriebsart eingelegt ist, wobei das erste Übersetzungsverhältnis höher als das zweite Übersetzungsverhältnis ist.

10. Heckenschere nach Anspruch 9, bei der das Getriebe (4) ein Zweigang-Planetengetriebe umfasst.

11. Heckenschere nach einem der vorangehenden Ansprüche, die Mittel zum Variieren der Drehzahl und des Drehmoments des Motors (3) entsprechend der ausgewählten Betriebsart einschließt.

12. Heckenschere nach einem der vorangehenden Ansprüche, so eingerichtet, dass die Zähne der beiden Messer in der Heckenscheren-Betriebsart nie vollständig ausgerichtet sind, und bei der die Zähne in der Gartenscheren-Betriebsart ausgerichtet sind.

## Revendications

1. Taille-haie (1) comprenant un moteur électrique (3) et au moins deux lames de coupe (5, 6), chaque lame comprenant au moins une rangée de dents, le moteur (3) étant relié à au moins l'une des lames, de sorte que la rotation du moteur produise un mouvement d'au moins l'une des lames par rapport à l'autre, un premier commutateur actionné par l'utilisateur (10) pour actionner les lames du taille-haie et un second commutateur actionné par l'utilisateur (11) qui permet à un utilisateur de choisir entre au moins deux modes de fonctionnement du taille-haie, les deux modes comprenant un mode taille-haie dans lequel le fonctionnement du premier commutateur actionné par l'utilisateur (10) entraîne un mouvement de va-et-vient de la au moins une lame, et un mode sécateur dans lequel le fonctionnement du premier commutateur actionné par l'utilisateur (10) entraîne la réalisation d'un seul cycle de coupe.

2. Taille-haie selon la revendication 1 agencé de sorte que, en mode taille-haie, le premier commutateur actionné par l'utilisateur (10) sert à entraîner au moins l'une des lames du taille-haie (1) en un mouvement de va-et-vient à une vitesse relativement élevée et à un couple relativement faible par rapport à l'autre lame, de façon à ce que des espaces s'ouvrent et se ferment de façon répétée entre les dents d'une lame et les dents de l'autre lame, dans lequel des branches relativement fines peuvent être prises et broyées, et dans lequel en outre, en mode sécateur, les lames sont d'abord maintenues en position fixe de sorte qu'un espace soit présent entre les dents d'une lame et les dents de l'autre lame, et le commutateur actionné par l'utilisateur sert à mettre en mouvement au moins une lame à une vitesse relativement plus faible et un couple relativement plus élevé par rapport à l'autre afin de réaliser une seule course de coupe en amenant l'autre lame de façon à fermer l'espace avant de revenir en arrière à sa position fixe d'origine.

3. Taille-haie selon la revendication 1 ou la revendication 2 adapté de sorte que, lors du passage en mode sécateur, les lames sont automatiquement déplacées à une position dans laquelle le plus grand espace possible est prévu entre les dents d'une lame et les dents correspondantes de l'autre lame, et une fois dans cette position, celles-ci sont maintenues ainsi jusqu'à ce que l'utilisateur actionne commutateur actionné par l'utilisateur afin de réaliser la coupe unique.

4. Taille-haie selon l'une quelconque des revendications précédentes, dans lequel le premier commutateur actionné par l'utilisateur (10) comprend une gâchette ou un autre dispositif à tirer ou enfoncer pour actionner le commutateur.

5. Taille-haie selon l'une quelconque des revendications précédentes, disposé de sorte que lors de chaque actionnement du premier commutateur actionné par l'utilisateur en mode sécateur, le taille-haie réalise uniquement une course de coupe composée d'un mouvement de fermeture et de réouverture.

6. Taille-haie selon l'une quelconque des revendications précédentes, disposé de sorte que lorsque, en mode sécateur, le commutateur actionné par l'utilisateur (10) est libéré avant l'achèvement d'un cycle de coupe, les lames du taille-haie reviennent immédiatement par le chemin le plus court à la position de départ d'origine.

7. Taille-haie selon l'une quelconque des revendications 1 à 5, adapté pour que, dans le cas où le premier commutateur actionné par l'utilisateur (10) est libéré pendant le cycle de coupe le mouvement de la lame est arrêté, et le cycle se poursuit ensuite si le commutateur actionné par l'utilisateur est de nouveau actionné.

8. Taille-haie selon l'une quelconque des revendications 1 à 5, configuré de sorte que lorsque, en mode sécateur, la gâchette (10) est libérée pendant le cycle de coupe, le mouvement de la lame (ou des lames) s'arrête et les lames reviennent par le chemin le plus court à leur position de départ lorsque le premier commutateur actionné par l'utilisateur est de nouveau actionné.

9. Taille-haie selon l'une quelconque des revendications précédentes, qui comprend une boîte de vitesse (4) ayant une entrée reliée au moteur et une sortie reliée à au moins l'une des lames, directement ou par l'intermédiaire d'une tringlerie, la boîte de vitesse (4) ayant au moins deux rapports de transmission différents et le rapport de transmission qui est sélectionné à tout moment étant dépendant du mode de fonctionnement qui est sélectionné, un premier des rapports de transmission étant mis en prise lorsque l'appareil est en mode taille-haie et un second lorsqu'il est en mode sécateur, le premier rapport de transmission étant supérieur au second rapport de transmission.

10. Taille-haie selon la revendication 9, dans lequel la boîte de vitesse (4) comprend un train épicycloïdal à 2 étages.

11. Taille-haie selon l'une quelconque des revendications précédentes, qui comprend des moyens destinés à faire varier la vitesse et le couple du moteur (3) en fonction du mode sélectionné.

12. Taille-haie selon l'une quelconque des revendications précédentes, disposé de sorte que, en mode taille-haie, les dents des deux lames ne sont jamais complètement alignées, et dans lequel les dents sont alignées lorsque l'appareil est en mode sécateur.
